(19) Europäisches Patentamt
European Patent Office
Office européen des brevets

(11) **EP 3 325 850 B1**

(12) **EUROPÄISCHE PATENTSCHRIFT**

(45) Veröffentlichungstag und Bekanntmachung des Hinweises auf die Patenterteilung:
**24.03.2021 Patentblatt 2021/12**

(21) Anmeldenummer: **16734255.9**

(22) Anmeldetag: **27.06.2016**

(51) Int Cl.:
*F16H 59/70* (2006.01)  *B60W 50/038* (2012.01)

(86) Internationale Anmeldenummer:
**PCT/EP2016/064873**

(87) Internationale Veröffentlichungsnummer:
**WO 2017/012831 (26.01.2017 Gazette 2017/04)**

(54) **SENSORLOSE ISTGANG-MODELLIERUNG**

SENSORLESS MODELING OF A CURRENTLY ENGAGED GEAR

MODÉLISATION DE RAPPORT RÉEL SANS CAPTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.07.2015 DE 102015213613**

(43) Veröffentlichungstag der Anmeldung:
**30.05.2018 Patentblatt 2018/22**

(73) Patentinhaber: **Volkswagen Aktiengesellschaft 38440 Wolfsburg (DE)**

(72) Erfinder:
• **WEISS, Norbert**
  **38173 Sickte (DE)**
• **THIAMTONG, Vasoontara**
  **38442 Wolfsburg (DE)**
• **MICHAU, Peter**
  **38104 Braunschweig (DE)**
• **LI, Mi**
  **38518 Gifhorn (DE)**
• **VOSWINCKEL, Jan Franz-Moritz**
  **38118 Braunschweig (DE)**

(56) Entgegenhaltungen:
**EP-A2- 1 930 631    FR-A1- 2 907 746**

**Beschreibung**

Die Erfindung betrifft ein Verfahren und eine elektronische Vorrichtung, die beispielsweise in einer Motorsteuerung eines Kraftfahrzeugs eingesetzt werden kann, um eine sensorlose Istgang-Modellierung zu ermöglichen. Basierend auf der Istgang-Modellierung kann ferner eine Kupplungsschutzreaktion vorgenommenen werden.

Es ist bekannt, dass eine signifikante Differenz zwischen der Motordrehzahl und der Getriebeeingangsdrehzahl (allgemein als "Kupplungsschlupf" bezeichnet) zu einer Abnutzung der Kupplung führen kann. Um solche Abnutzung zu vermeiden, ist es vorteilhaft, wenn Kupplungsschlupf möglichst reduziert wird. Hierfür werden in Kraftfahrzeugen Kupplungsschutzfunktionen realisiert.

Zur Anwendung der Kupplungsschutzfunktion für Handschaltgetriebe ist die Kenntnis der Kupplungs-Differenzdrehzahl nötig. Diese Kupplungs-Differenzdrehzahl kann beispielsweise mittels Drehzahlsensoren in Motor und am Getriebe ermittelt werden. Nicht jedes Fahrzeug weist jedoch einen Drehzahlsensor auf, der Rückschluss auf die Getriebeeingangsdrehzahl erlaubt. In solchen Fällen sind alternative Wege erforderlich, um die Getriebedrehzahl zu ermitteln.

Aus der europäischen Patentschrift EP 1 930 631 B1 ist eine Gangpositionsbestimmungsvorrichtung für Handschaltgetriebe und eine Gangschaltungsaufforderungsvorrichtung für Fahrzeuge bekannt. Ein aktuell eingelegter Getriebegang wird aus der Motorgeschwindigkeit und der erfassten Fahrzeuggeschwindigkeit auf Basis einer Gangabschätzungskarte ermittelt. Das Verfahren hat jedoch den Nachteil, dass Kupplungsschlupf nicht berücksichtigt wird, was besonders in Anfahr- und Beschleunigungssituationen von Nachteil ist.

Aus dem US-Patent Nr. 6,490,517 B1 ist ein Verfahren zur Bestimmung eines leistungsfähigsten Ganges für ein Fahrzeug bekannt, wenn dieses Beschleunigungsvorgänge ausführt. Auch dieses Verfahren beruht auf der Auswertung des Verhältnisses zwischen Fahrzeuggeschwindigkeit und Motorgeschwindigkeit und hat damit den Nachteil, dass Kupplungsschlupf nicht berücksichtigt wird.

Aus der europäischen Patentschrift EP 2 331 848 B1 ist ein Verfahren zur Bestimmung des Zustands eines Getriebes bekannt. Das Verfahren beruht auf einer Bestimmung eines Trägheitsmoments auf Basis eines aus Winkelgeschwindigkeiten berechneten Übersetzungsverhältnisses und auf Basis eines ermittelten Motordrehzahlmoments. Durch Vergleich des berechneten Trägheitsmoments mit dem Trägheitsmoment der Getriebeeingangswelle wird ermittelt, ob sich das Getriebe in der neutralen Position befindet, oder ob ein Gang eingelegt ist. Rückschlüsse auf den eingelegten Gang erlaubt das Verfahren jedoch nicht.

FR2907746A1 offenbart ein Verfahren zur Identifizierung eines Übersetzungsverhältnisses eines Schaltgetriebes durch eine direkte Berechnung auf der Grundlage eines Verhältnisses zwischen einer Motordrehzahl und einer Geschwindigkeit eines Kraftfahrzeugs bei geschlossener Kupplung. Das Übersetzungsverhältnis wird auf vorausschauende Weise definiert, wobei anhand von Daten, die für den Zustand eines Fahrzeugs repräsentativ sind, z.B. der Längsbeschleunigung, abgeschätzt wird, ob das Übersetzungsverhältnis bei nicht geschlossener Kupplung größer, kleiner oder identisch mit dem ermittelten letztgenannten Verhältnis ist. Das ermittelte letztere Verhältnis wird mit der Schätzung des Übersetzungsverhältnisses korrigiert.

Aufgabe der vorliegenden Erfindung ist es, ein Verfahren bzw. eine entsprechende elektronische Vorrichtung bereitzustellen, welche die oben genannten Nachteile wenigstens teilweise überwinden.

Diese Aufgabe wird durch eine erfindungsgemäße Verfahren nach Anspruch 1 und eine erfindungsgemäße elektronische Vorrichtung nach Anspruch 11 gelöst.

Weitere vorteilhafte Ausgestaltungen der Erfindung ergeben sich aus den Unteransprüchen und der folgenden Beschreibung bevorzugter Ausführungsbeispiele der vorliegenden Erfindung. Ein erfindungsgemäßes Verfahren umfasst ein Ermitteln einer Istgang-Abschätzung in einem Kraftfahrzeug mit einer Kupplung zwischen einem Motor und einem Getriebe, wobei die Istgang-Abschätzung auf einer Zug-Schub-Ermittlung beruht. Bei dem Kraftfahrzeug handelt es sich vorzugsweise um einen Personenkraftwagen, einen Lastkraftwagen, ein Motorrad oder dergleichen. Bei dem Motor kann es sich um beliebige Motortypen handeln, beispielsweise eine Verbrennungskraftmaschine oder dergleichen. Bei dem Getriebe kann es sich um ein Fahrzeuggetriebe handeln, z.B. ein Getriebe mit sechs verschiedenen Getriebeübersetzungen, die hier auch als Gänge bezeichnet werden. Ein Schalthebel kann vorgesehen werden, der es einem Fahrer ermöglicht, einen Gang anzuwählen.

Eine Istgang-Abschätzung kann Ergebnisse liefern, die Rückschlüsse auf den eingelegten Gang ermöglichen. Beispielsweise kann in gewissen Situationen eine Istgang-Abschätzung den tatsächlich eingelegten Gang sicher ermitteln. Auch kann eine Istgang-Abschätzung in anderen Situationen mehrere plausible Gänge aus der Gesamtheit der Gänge angeben. Ferner kann eine Istgang-Abschätzung auch den nächstliegenden von mehreren plausiblen Gängen angeben.

In einer bevorzugten Ausführungsform beruht die Zug-Schub-Ermittlung auf einer Kupplungsmomentenberechnung. Auf Grundlage der Kupplungsmomentenberechnung kann beispielsweise darauf rückgeschlossen werden, ob eine Zugphase oder eine Schubphase vorliegt.

Beispielsweise kann die Zug-Schub-Ermittlung eine Berechnung eines Kupplungsistmomentes gemäß folgender Gleichung umfassen:

$$M_{kup,ist} = M_{mot} - \theta_{mot} \times \dot{\omega}_{mot}$$

wobei $M_{kup,ist}$ ein Kupplungsistmoment ist, $M_{mot}$ ein Drehmoment des Motors ist, $\theta_{mot}$ ein Trägheitsmoment des Motors ist und $\dot{\omega}_{mot}$ eine zeitliche Änderungen der Motorwinkelgeschwindigkeit ist.

Die Zug-Schub-Ermittlung kann ferner einen Vergleich des berechneten Kupplungsistmoments $M_{kup,ist}$ mit Schwellwerten für Zug und Schub umfassen. Dies hat den Vorteil, dass eine sichere Entscheidung über Zug oder Schub getroffen werden kann.

In einer Ausführungsform beruht die Istgang-Abschätzung auf einem Vergleich einer Motordrehzahl mit einer Eingangsdrehzahl eines Ganges. Auf diese Weise kann eine Differenzdrehzahl ermittelt werden, die es wiederum ermöglicht, darauf rückzuschließen, ob unzulässiger Schlupf vorliegt oder nicht.

Der Vergleich der Motordrehzahl mit der Eingangsdrehzahl kann ferner das Ergebnis der Zug-Schub-Ermittlung berücksichtigen. Auf diese Weise wird es möglich, auf weitere Sensoren, wie beispielsweise einen Allgangsensor zu verzichten.

In einer bevorzugten Ausführungsform berücksichtigt die Istgang-Abschätzung auf Basis der Zug-Schub-Ermittlung jeweils eine Vorzugsrichtung, beispielsweise bei Schub hin zu längeren Gängen oder bei Zug hin zu kürzeren Gängen. So sind beispielsweise bei ununterbrochenem Zug Änderungen hin zu längeren Gängen sinnvoll, im Schub entsprechend Änderungen hin zu kürzeren Gängen.

Beruhend auf der ermittelten Istgang-Abschätzung kann bei Kupplungsschlupf ferner eine Kupplungsschutzreaktion ausgeführt werden. Dies hat den Vorteil, dass dadurch eine Abnutzung der Kupplung verringert werden kann. Die Lebensdauer der Kupplung wird erhöht. Insbesondere bei schwacher Tragfähigkeit der Kupplung kann eine Kupplungsschutzreaktion die Fahreigenschaften verbessern.

Die Kupplungsschutzreaktion kann beispielsweise dadurch bewirkt werden, dass, sobald im Zug unzulässiger Kupplungsschlupf bezogen auf den nächstgelegenen Gang erkannt wird, dieser durch einen reduzierenden Motormomenteneingriff abgebaut wird. Dadurch kann unzulässiger Schlupf vermieden werden.

In einer bevorzugten Ausführungsform wird durch den Motormomenteneingriff die Motordrehzahl auf die Drehzahl des eingelegten Ganges überführt. Auch dadurch kann vorteilhafter Weise Kupplungsschlupf vermieden werden.

Eine erfindungsgemäße elektronische Vorrichtung ist dazu ausgelegt, die oben beschriebenen Verfahren auszuführen. Bei der elektronischen Vorrichtung kann es sich um einen Mikroprozessor handeln, der beispielsweise in einem Motorsteuerungssystem eingesetzt wird. Die elektronische Vorrichtung kann dazu ausgelegt sein, Software auszuführen, die Funktionalität aufweist, um die oben beschriebenen Verfahren auszuführen.

Ausführungsbeispiele der Erfindung werden nun beispielhaft und unter Bezugnahme auf die beigefügten Zeichnungen beschrieben, in denen:

Fig. 1 schematisch ein Ausführungsbeispiel von Komponenten eines Kraftfahrzeugs zeigt;

Fig. 2 ein Diagramm zeigt, in dem schematisch und beispielhaft dargestellt ist, wie beruhend auf einer Zug-Schub-Ermittlung eine Istgang-Abschätzung durchgeführt werden kann;

Fig. 3 schematisch eine Istgang-Erkennung in einer Zugphase zeigt;

Fig. 4 schematisch eine Istgang-Erkennung in einer Schubphase zeigt;

Fig. 5 ein Ausführungsbeispiel für eine Kupplungsschutzreaktion bei Zug zeigt;

Fig. 6 ein Ausführungsbeispiel für funktionelle Komponenten einer elektronischen Vorrichtung zeigt;

Fig. 7 ein weiteres Ausführungsbeispiel für funktionelle Komponenten einer elektronischen Vorrichtung zeigt; und

Fig. 8 einen beispielhaften Verlauf des Kupplungssollmoments $M_{kup,soll}$ in Abhängigkeit des Kupplungsweges zeigt.

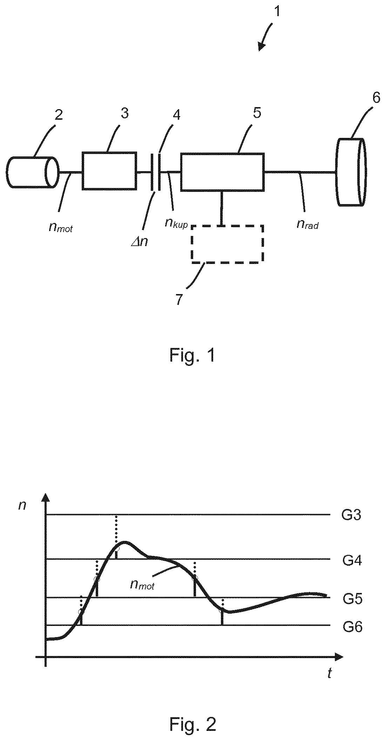

Ein Ausführungsbeispiel von Komponenten eines Kraftfahrzeugs ist in Fig. 1 gezeigt. Das Kraftfahrzeug 1 weist einen Motor 2 auf, der Antriebskraft über ein Zweimassenschwungrad 3, eine Kupplung 4 und ein Getriebe 5 auf ein Rad 6 überträgt. Über einen Schalthebel 7 lassen sich am Getriebe 5 verschiedene Getriebegänge anwählen, die jeweils ein spezifisches Übersetzungsverhältnis des Getriebes 5 festlegen.

Fig. 1 zeigt auch schematisch eine Drehzahl $n_{mot}$ des Motors, eine Drehzahl $n_{kup}$ des Getriebe und eine Raddrehzahl $n_{rad}$. So kann an der Kupplung 4 eine Drehzahldifferent $\Delta n$, zwischen Motorseite Getriebeseite vorliegen. Ist das vom Motor 2 in die Kupplung 4 eingeleitete Moment größer als das von der Kupplung übertragbare Moment, so steigt die Drehzahldifferent $\Delta n$. Liegt eine Drehzahldifferent $\Delta n$ vor, so spricht man auch von Kupplungsschlupf.

Ist die Drehzahl $n_{mot}$ des Motors 2 größer als die Eingangsdrehzahl $n_{kup}$ des Getriebes, so fließt bei schlupfender Kupplung Leistung vom Motor zum Getriebe.

Im Folgenden werden Ausführungsbeispiele von Verfahren zum Ermitteln einer Istgang-Abschätzung in einem Kraftfahrzeug mit einer Kupplung zwischen einem Motor und einem Getriebe beschrieben.

**Zug-Schub-Ermittlung**

Mittels Zug-Schub-Ermittlung wird ermittelt, ob sich das Kraftfahrzeug in einer Zugphase oder einer Schubphase befindet. Im folgend beschriebenen Ausführungsbeispiel beruht eine Zug-Schub-Ermittlung auf einer Kupplungsmomentenberechnung.

Gemäß der Gleichung:

$$M_{kup,ist} = M_{mot} - \theta_{mot} \times \dot{\omega}_{mot}$$

wird beruhend auf dem Drehmoment des Motors $M_{mot}$, dem Trägheitsmoment $\theta_{mot}$ des Motors und der Motorwinkelbeschleunigung $\dot{\omega}_{mot}$ ein Kupplungsistmoment $M_{kup,ist}$ ermittelt. Der Anteil $\theta_{mot} \times \dot{\omega}_{mot}$ beschreibt das Drehmoment, das zu einer Drehzahländerung des Motors selbst erforderlich ist. $\omega_{mot}$ bezeichnet hierbei die Motorwinkelgeschwindigkeit in SI-Einheiten (rad/s) und $\dot{\omega}_{mot}$ die zeitliche Änderungen der Motorwinkelgeschwindigkeit und ist also proportional zu dem Motordrehzahlgradienten.

Für obige Zwecke kann angenommen werden, dass das Trägheitsmoment $\theta_{mot}$ des Motors aus der Motorspezifikation bekannt ist und dass das Drehmoment $M_{mot}$ des Motors und die Motorwinkelgeschwindigkeit $\omega_{mot}$ aus dem Motorsteuerungssystem abrufbar ist.

Ein positives Kupplungsistmoment $M_{kup,ist}$ zeigt an, dass der Motor ein positives Drehmoment auf das Getriebe ausübt und somit eine Zugphase vorliegt. Ein negatives Kupplungsistmoment $M_{kup,ist}$ zeigt an, dass in umgekehrter Richtung das Getriebe ein beschleunigendes Drehmoment auf den Motor ausübt und somit eine Schubphase vorliegt.

Um möglichst sichere Ergebnisse der Zug-Schub-Ermittlung zu erlangen, wird in diesem Ausführungsbeispiel das ermittelte Kupplungsistmoment gegen einen vordefinierten Schwellwert $M_{th}$ geprüft. Auf eine Zugphase wird nur geschlossen, falls das Kupplungsistmoment $M_{kup,ist}$ größer als der Schwellwert $M_{th}$ ist. Auf eine Schubphase wird nur geschlossen, falls das Kupplungsistmoment $M_{kup,ist}$ kleiner als der Schwellwert -$M_{th}$ ist.

Zug: $M_{kup,ist} > M_{th}$ (z.B. 20 Nm)

Schub: $M_{kup,ist} < -M_{th}$ (z.B. -20 Nm)

**Istgang-Abschätzung**

Fig. 2 zeigt ein Diagramm, in dem schematisch und beispielhaft dargestellt ist, wie beruhend auf der Zug-Schub-Ermittlung eine Istgang-Abschätzung durchgeführt werden kann.

In dem Diagramm der Fig. 2 ist auf der Rechtswertachse die Zeit t und auf der Hochwertachse die Drehzahl $n$ aufgetragen. Das Diagramm zeigt den Verlauf der Motordrehzahl $n_{mot}$. Die Motordrehzahl $n_{mot}$ ist proportional zu der in obiger Gleichung genannten Motorwinkelgeschwindigkeit $\omega_{mot}$. Die in diesem Ausführungsbeispiel verwendeten unterschiedlichen Bezeichnungen gehen lediglich darauf zurück, dass die Motorwinkelgeschwindigkeit in der Gleichung in SI-Einheiten ausgedrückt ist, wogegen in dem Diagramm der Fig. 2 nicht notwendiger SI-Einheiten verwendet werden. Die Motordrehzahl $n_{mot}$ kann in einer üblichen Einheit wie beispielsweise U/min (Umdrehungen pro Minute) oder U/s (Umdrehungen pro Sekunde) ausgedrückt werden. $\omega_{mot}$ und $n_{mot}$ können beispielsweise als proportional angesehen werden, z.B. gemäß der Beziehung $\omega_{mot} = 2\pi n_{mot}$ mit den SI-Einheiten $[\omega_{mot}]$ = rad/s und $[n]$ = 1/s.

In der Fig. 2 sind ferner die Eingangsdrehzahlen von vier Getriebegänge G3, G4, G5 und G6 als horizontale Linien eingezeichnet. Die Eingangsdrehzahl eines Ganges wird hier durch Multiplikation einer ermittelten Raddrehzahl (oder mehrerer Raddrehzahlen) mit der aus der Getriebespezifikation bekannten Getriebeübersetzung ermittelt. Raddrehzahlen werden auf die dem Fachmann bekannte Weise, beispielsweise mittels Drehzahlsensoren ermittelt. Hier kann angenommen werden, dass die Raddrehzahlen beispielsweise (über den CAN-Bus) aus einem Bremsensteuerungsgerät abrufbar sind. Auch kann hier wieder angenommen werden, dass die Motordrehzahl $n_{mot}$ aus dem Motorsteuerungssystem abrufbar ist.

Beruhend auf dem Ergebnis der oben beschriebenen Zug-Schub-Ermittlung können bei einer Abweichung der ermittelten Motordrehzahl $n_{mot}$ von den nächstliegenden Eingangsdrehzahlen Rückschlüsse auf den Istgang gezogen werden.

Zunächst kann auf den nächstliegenden plausiblen Gang geschlossen werden, indem ausgehend von der Motordrehzahl $n_{mot}$ bei einer erkannten Zugphase sämtliche Gänge als plausible betrachtet werden, deren Eingangsdrehzahl kleiner ist als die (oder gleich ist zur) Motordrehzahl $n_{mot}$. Gleichermaßen können bei einer erkannten Schubphase sämtliche Gänge als plausible betrachtet werden, deren Eingangsdrehzahl größer ist als die (oder gleich ist zur) Motordrehzahl $n_{mot}$.

Als eine Abschätzung des Istgangs kann zunächst der nächstliegende plausible Istgang betrachtet werden, also jener Gang der als plausibel ermittelten Gänge, dessen Eingangsdrehzahl der Motordrehzahl $n_{mot}$ am nächsten liegt.

Ist die Motordrehzahl $n_{mot}$ gleich (oder nahe an) der Eingangsdrehzahl eines Ganges, so verschwindet die Differenzdrehzahl $\Delta n$, bezüglich der Eingangsdrehzahl dieses plausiblen Ganges und der fragliche Gang kann als der nächstliegende plausible Gang betrachtet werden.

Verschwindet die Differenzdrehzahl für einen gewissen Zeitraum, so kann auf eine Synchronizität geschlossen werden und der nächstliegende Gang kann als Istgang (eingelegter Gang) erkannt werden. Auch kann, falls sich bei änderndem Motordrehmoment keine Differenzdrehzahl einstellt auf Synchronizität geschlossen werden und demgemäß der nächstliegende Gang als Istgang erkannt werden.

In Fig. 2 sind durch vertikale Linien fiktive Differenzdrehzahlen zum jeweils nächstliegenden plausiblen Gang angegeben, wobei sich die vertikalen gepunkteten Linien auf erkannte Schubphasen beziehen und sich die vertikalen durchgezogenen Linien auf erkannte Zugphasen beziehen.

Auf Grundlage des oben dargelegten Grundprinzips lässt sich demnach der eingelegte Istgang mittels einer Zug-Schub-Unterscheidung abschätzen. Die Istgang-Abschätzung kann darauf beruhen, dass aus den möglichen Gängen die Untermenge der plausiblen Gänge ermittelt wird. Die Istgang-Abschätzung kann ferner darauf beruhen, auf den nächstgelegenen plausiblen Gang zu schließen. Folgend kann im Rahmen der Istgang-Abschätzung, wie unten detaillierter beschrieben, der real tragende Gang ohne Schlupf (im Fehlerfall durch Motormomentenreduktion herbeiführbar) festgestellt werden. Diese Istgang-Erkennung wird im Folgenden näher erläutert.

## Istgang-Erkennung

Im Folgenden wird nun beschrieben, wie - solange der Triebstrang nicht vollständig geöffnet wird (mittels Schalthebel / Kupplungspedal) - kontinuierlich anhand der Differenzdrehzahlbedingungen für Zug bzw. Schub der ermittelte Istgang präzisiert und nachgeführt werden kann.

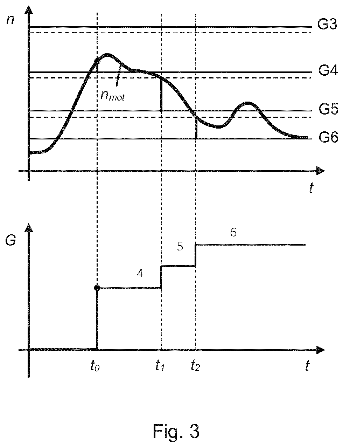

Fig. 3 zeigt schematisch eine Istgang-Erkennung in einer Zugphase. Das obere Diagramm der Fig. 3 entspricht dem Diagramm der Fig. 2. Auf der Rechtswertachse ist die Zeit t und auf der Hochwertachse die Drehzahl $n$ aufgetragen. Das Diagramm zeigt den Verlauf der Motordrehzahl $n_{mot}$ und die Eingangsdrehzahlen von vier Getriebegänge G3, G4, G5 und G6 als horizontale Linien. Das darunterliegende Diagramm zeigt auf der Rechtswertachse ebenfalls die Zeit t und auf der Hochwertachse den nächstliegenden plausiblen Gang G.

In einem ersten Zeitabschnitt ist die Kupplung gelöst. Eine Zug-Schub-Erkennung ist bei gelöster Kupplung nicht möglich, oder anders ausgedrückt, bei gelöster Kupplung gibt es weder Zug noch Schub. Eine Istgang-Abschätzung ist in diesem Zeitabschnitt nicht möglich, bzw. liefert ein unbestimmtes Ergebnis. Zur Zeit $t_0$ wird ein Gang eingelegt. Erstmals liefert die Zug-Schub-Erkennung ein definiertes Ergebnis, nämlich dass sich das Fahrzeug in einer Zugphase befindet. Auf Grundlage der Motordrehzahl $n_{mot}$ und den Eingangsdrehzahlen G3, G4, G5 und G6 der sechs Getriebegänge wird als nächstliegender plausibler Gang G4 ermittelt. Die Gänge G5 und G6 sind weitere plausible Gänge. Zum Zeitpunkt $t_1$ ist die Motordrehzahl $n_{mot}$ signifikant unter die Eingangsdrehzahl des vierten Ganges G4 gefallen. Gang G4 scheidet deshalb als plausibler Gang aus. Es verbleiben die Gänge G5 und G6 als plausible Gänge, wobei zum Zeitpunkt $t_1$ Gang G5 der nächstliegende plausible Gang ist. Ab Zeitpunikt $t_2$ ist die Motordrehzahl $n_{mot}$ signifikant unter die Eingangsdrehzahl des fünften Ganges G5 gefallen. Gang G5 scheidet deshalb als plausibler Gang aus. Es verbleibt Gang G6 als einziger plausibler Gang. Gang G6 kann deshalb als Istgang erkannt und gehalten werden.

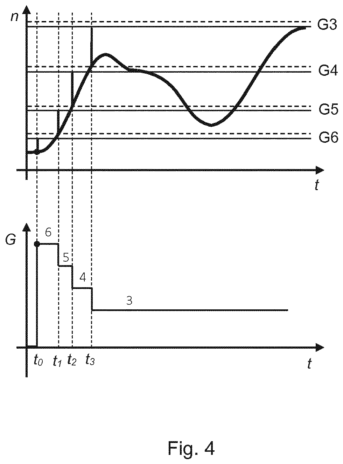

Fig. 4 zeigt schematisch eine Istgang-Erkennung in einer Schubphase. Auf der Rechtswertachse des oberen Diagramms ist die Zeit t und auf der Hochwertachse die Drehzahl $n$ aufgetragen. Das obere Diagramm zeigt den Verlauf der Motordrehzahl $n_{mot}$ und die Eingangsdrehzahlen von sechs Getriebegänge G3, G4, G5 und G6 als vertikale Linien. Das darunterliegende Diagramm zeigt auf der Rechtswertachse ebenfalls die Zeit t und auf der Hochwertachse den nächstliegenden plausiblen Gang G.

In einem ersten Zeitabschnitt ist die Kupplung gelöst. Eine Zug-Schub-Erkennung ist bei gelöster Kupplung nicht möglich, oder anders ausgedrückt, bei gelöster Kupplung gibt es weder Zug noch Schub. Eine Istgang-Abschätzung ist in diesem Zeitabschnitt nicht möglich, bzw. liefert ein unbestimmtes Ergebnis. Zur Zeit $t_0$ wird ein Gang eingelegt. Erstmals liefert die Zug-Schub-Erkennung ein definiertes Ergebnis, nämlich dass sich das Fahrzeug in einer Schubphase befindet. Auf Grundlage der Motordrehzahl $n_{mot}$ und den Eingangsdrehzahlen G3, G4, G5 und G6 der sechs Getriebegänge wird als nächstliegender plausibler Gang G6 ermittelt. Die Gänge G5 und kleiner sind weitere plausible Gänge. Zum Zeitpunkt $t_1$ ist die Motordrehzahl $n_{mot}$ signifikant über die Eingangsdrehzahl des sechsten Ganges G6 gestiegen. Gang G6 scheidet deshalb als plausibler Gang aus. Es verbleiben die Gänge G5 und kleiner als plausible Gänge, wobei ab dem Zeitpunkt $t_1$ Gang G5 der nächstliegende plausible Gang ist. Zum Zeitpunkt $t_2$ ist die Motordrehzahl $n_{mot}$ signifikant über die Eingangsdrehzahl des fünften Ganges G5 gestiegen. Gang G5 scheidet deshalb als plausibler Gang aus. Es verbleiben die Gänge G4 und kleiner als plausible Gänge, wobei ab dem Zeitpunkt $t_2$ Gang G4 der nächstliegende plausible Gang ist. Zum Zeitpunkt $t_3$ ist die Motordrehzahl $n_{mot}$ signifikant über die Eingangsdrehzahl des vierten Ganges G4 gestiegen. Auch Gang G4 scheidet deshalb als plausibler Gang aus. Es verbleiben die Gänge G3 und kleiner als nächstliegender plausibler Gang, der im Folgenden als Istgang erkannt wird, da die Motordrehzahl nicht signifikant über die Eingangsdrehzahl des Ganges G3 steigt bzw. beruhend auf den oben dargelegten Prinzipien auf Synchronizität geschlossen werden kann.

## Kupplungsschutzreaktion

Im Folgenden wird ein Ausführungsbeispiel einer Kupplungsschutzreaktion beschrieben. Das Grundprinzip der Kupplungsschutzreaktion dieses Ausführungsbeispiels beruht darauf, dass, sobald im Zug unzulässiger Kupplungsschlupf (bezogen auf den nächstgelegenen Gang) erkannt wird, dieser durch einen reduzierenden Motormomenteneingriff abgebaut wird.

Durch diesen Motormomenteneingriff kann beispielsweise die Motordrehzahl auf die Drehzahl des eingelegten Ganges überführt werden.

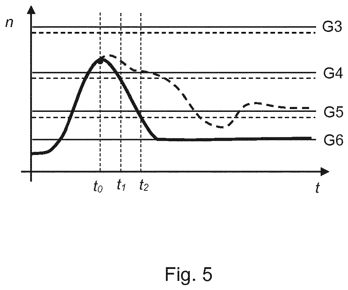

Fig. 5 zeigt ein Ausführungsbeispiel für eine Kupplungsschutzreaktion bei Zug. Das Diagramm der Fig. 5 entspricht dem Diagramm der Fig. 2. Auf der Rechtswertachse ist die Zeit $t$ und auf der Hochwertachse die Drehzahl $n$ aufgetragen. Die gestrichelte Linie zeigt den Verlauf der Motordrehzahl $n_{mot}$ ohne Kupplungsschutzreaktion. Die durchgezogene Linie zeigt den Verlauf der Motordrehzahl $n_{mot}$ mit Kupplungsschutzreaktion. Die Eingangsdrehzahlen von vier Getriebegängen G3, G4, G5 und G6 sind als horizontale Linien gezeigt. Wie bereits in Zusammenhang mit Fig. 2 beschrieben wurde, liegt zum Zeitpunkt $t_0$ ein erfolgreiches Zug-Schub-Ergebnis vor, wonach sich das Fahrzeug in einer Zugphase befindet. Mit diesem Ergebnis der Zug-Schub-Ermittlung und aus der Motordrehzahl $n_{mot}$ zur Zeit $t_0$ kann Gang G4 als nächstliegender plausibler Gang bestimmt werden. Die Gänge G5 und G6 sind weitere plausible Gänge. Da bezüglich der Eingangsdrehzahlen der plausiblen Gänge G4, G5 und G6 jeweils signifikante Differenzdrehzahlen erkannt werden, die als etwaiger unzulässiger Schlupf interpretiert werden, wird durch Motormomenteneingriff die Motordrehzahl $n_{mot}$ unter die Eingangsdrehzahl des Ganges G4 überführt. Zum Zeitpunkt $t_1$ liegt die Motordrehzahl $n_{mot}$ signifikant unter der Eingangsdrehzahl des Ganges G4, so dass Gang G4 als plausibler Gang ausscheidet und nun Gang G5 als nächstliegender Gang angenommen wird. Gang G6 bleibt plausibel. Da bezüglich der Eingangsdrehzahlen der plausiblen Gänge G5 und G6 weiterhin signifikante Differenzdrehzahlen erkannt werden, was weiterhin als etwaiger unzulässiger Schlupf interpretiert wird, wird durch Motormomenteneingriff die Motordrehzahl $n_{mot}$ unter die Eingangsdrehzahl des Ganges G5 überführt. Zum Zeitpunkt $t_2$ liegt die Motordrehzahl $n_{mot}$ signifikant unter der Eingangsdrehzahl des Ganges G5, so dass Gang G5 als plausibler Gang ausscheidet und nun Gang G6 als einziger plausibler Gang und damit als Istgang angenommen wird. Da bezüglich der Eingangsdrehzahl des Ganges G6 auch weiterhin eine Differenzdrehzahl erkannt wird, was als unzulässiger Schlupf interpretiert wird, wird durch Motormomenteneingriff die Motordrehzahl $n_{mot}$ auf die Eingangsdrehzahl des Ganges G6, also auf die Eingangsdrehzahl des Istganges überführt.

Die beschriebene Kupplungsschutzreaktion ist insbesondere dann von Vorteil, wenn die Tragfähigkeit der Kupplung stark herabgesetzt ist und deswegen ein dauerhafter Kupplungsschutzeingriff hilfreich ist.

## Funktionsübersicht

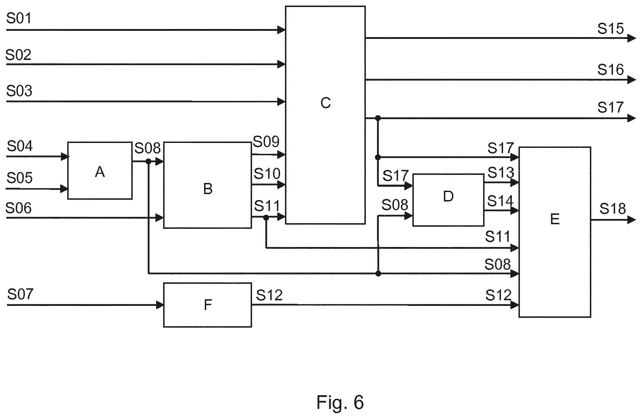

Fig. 6 zeigt ein Ausführungsbeispiel für funktionelle Komponenten einer elektronischen Vorrichtung, welche zur Implementierung der oben beschriebenen Verfahren eingesetzt werden kann. Die funktionellen Komponenten sind in diesem Ausführungsbeispiel als Software implementiert, die auf einem Mikroprozessor ausgeführt wird, beispielsweise dem Mikroprozessor eines Motorsteuerungssystems.

Die elektronische Vorrichtung umfasst als funktionelle Komponenten eine Komponente A zur Berechnung des Kupplungsistmomentes. Die Komponente A zur Berechnung des Kupplungsistmomentes empfängt als Eingangssignal ein Motordrehzahlsignal S04 und ein Motordrehmomentsignal S05 und liefert ein Kupplungsistmomentsignal S08 an eine Komponente B zur Zug-Schub-Ermittlung.

Die Komponente B zur Zug-Schub-Ermittlung empfängt das Kupplungsistmomentsignal S08 von der Komponente A zur Berechnung des Kupplungsistmomentes und ferner ein Kupplungspedalstatussignal S06 und ermittelt beruhend auf diesen Signalen ein Kupplungsmoment-Zug-Flag S09, ein Kupplungsmoment-Schub-Flag S10 und ein Kupplungsmoment-Offen-Flag S11. Die Komponente B zur Zug-Schub-Ermittlung gibt das Kupplungsmoment-Zug-Flag S09, das Kupplungsmoment-Schub-Flag S10 und das Kupplungsmoment-Offen-Flag S11 an eine Komponente C zur Gang- und Eingangsdrehzahlberechnung aus. Die Komponente B zur Zug-Schub-Ermittlung gibt ferner das Kupplungsmoment-Offen-Flag S11 an eine Komponente E zur Ermittlung der Kupplungsschutzreaktion aus.

Die Komponente C zur Gang- und Eingangsdrehzahlberechnung empfängt das Kupplungsmoment-Zug-Flag S09, das Kupplungsmoment-Schub-Flag S10 und das Kupplungsmoment-Offen-Flag S11 von der Komponente B zur Zug-Schub-Ermittlung. Die Komponente C zur Gang- und Eingangsdrehzahlberechnung empfängt ferner ein Fahrzeuggeschwindigkeitssignal S01, ein Reifenumfangsignal S02 und ein Schalthebelstatussignal S03. Beruhend auf dem Kupplungsmoment-Zug-Flag S09, dem Kupplungsmoment-Schub-Flag S10, dem Kupplungsmoment-Offen-Flag S11, dem Fahrzeuggeschwindigkeitssignal S01, dem Reifenumfangsignal S02 und dem Schalthebelstatussignal S03 ermittelt die Komponente C zur Gang- und Eingangsdrehzahlberechnung ein modelliertes Gangsignal S15, ein Getriebeeingangsdrehzahlsignal S16 und ein Differenzdrehzahlsignal S17. Die Komponente C zur Gang- und Eingangsdrehzahlberechnung gibt das modelliertes Gangsignal S15, das Getriebeeingangsdrehzahlsignal S16 und das Differenzdrehzahlsignal S17 als Ausgabesignale aus. Ferner gibt die Komponente C zur Gang- und Eingangsdrehzahlberechnung das Differenzdrehzahlsignal S17 an eine Komponente D zur Reibleistungsberechnung und die Komponente E zur Ermittlung einer Kupplungsschutzreaktion aus.

Die Komponente D zur Reibleistungsberechnung empfängt das Differenzdrehzahlsignal S17 von der Komponente C zur Gang- und Eingangsdrehzahlberechnung und das Kupplungsistmomentsignal S08 von der Komponente A zur Berechnung des Kupplungsistmomentes und ermittelt beruhend auf diesen ein Kupplungsreibleistungssignal S13 und ein Kupplungsreibenergiesignal S14 und gibt diese an die Komponente E zur Ermittlung einer Kupplungsschutzreaktion aus.

Eine Komponente F zur Ermittlung des Kupplungsmindestmomentes aus dem Kupplungspedalweg empfängt ein Kupplungswegsignal S07, ermittelt daraus ein Kupplungsmindestmomentsignal S12 und gibt dieses an die Komponente E zur Ermittlung einer Kupplungsschutzreaktion aus.

Die Komponente E zur Ermittlung einer Kupplungsschutzreaktion empfängt das Differenzdrehzahlsignal S17 von der Komponente C zur Gang- und Eingangsdrehzahlberechnung, das Kupplungsmoment-Offen-Flag S11 von der Komponente B zur Zug-Schub-Ermittlung, das Kupplungsreibleistungssignal S13 und das Kupplungsreibenergiesignal S14 von der Komponente D zur Reibleistungsberechnung, das Kupplungsistmomentsignal S08 von der Komponente A zur Berechnung des Kupplungsistmomentes und das Kupplungsmindestmomentsignal S12 von der Komponente F zur Ermittlung des Kupplungsmindestmomentes und ermittelt beruhend auf diesen Signalen ein Kupplungsschutz-Flag S18 und gibt dieses als Ausgangssignal aus.

Die Eingangssignale S01, S02, S03, S04, S05, S06 und S07 stehen der Motorsteuerung intern zur Verfügung oder können von dieser über den CAN-Bus von anderen Fahrzeugkomponenten abgefragt werden.

Das optionale Schalthebelstatussignal S03 gibt an, ob ein Gang eingelegt ist, gibt aber selbst keinen Aufschluss darüber, welcher Gang eingelegt ist. Das Schalthebelstatussignal S03 kann beispielsweise verwendet werden, um zu erkennen, ob eine gültige Zug-Schub-Erkennung überhaupt möglich ist. Beispielsweise kann die Komponente C zur Gang- und Eingangsdrehzahlberechnung beruhend auf dem Schalthebelstatussignal S03 prüfen, ob ein Gang eingelegt ist und, falls erkannt wird, dass kein Gang eingelegt ist, als modelliertes Gangsignal S15 einen undefinierten Wert ausgeben, der anzeigt, dass nicht definiert auf einen Gang rückgeschlossen werden kann.

Das optionale Fahrzeuggeschwindigkeitssignal S01 und das ebenfalls optionale Reifenumfangsignal S02 können von der Komponente C zur Gang- und Eingangsdrehzahlberechnung herangezogen werden, um die Raddrehzahl zu ermitteln, aus der gemäß den obigen Ausführungen die Eingangsdrehzahl der Gänge berechnet werden kann. Das Fahrzeuggeschwindigkeitssignal S01 und das Reifenumfangsignal S02 können beispielsweise zur Anwendung kommen, falls die Raddrehzahl nicht von Raddrehzahlsensoren zur Verfügung gestellt wird.

Das ebenfalls optionale Kupplungspedalstatussignal S06 kann von der Komponente B zur Zug-Schub-Ermittlung verwendet werden, um festzustellen, ob die Kupplung vollständig offen ist, oder nicht. Zeigt das Kupplungspedalstatussignal S06 an, dass die Kupplung offen ist, so kann die Komponente B zur Zug-Schub-Ermittlung die Zug-Schub-Ermittlung vorzeitig abbrechen, das Kupplungsmoment-Offen-Flag auf wahr setzen, das Kupplungsmoment-Zug-Flag S09 auf falsch setzen und das Kupplungsmoment-Schub-Flag S10 auf falsch setzen.

Das ebenfalls optionale Kupplungswegsignal S07 kann Aufschluss über den Kupplungspedalweg geben. Die Komponente F zur Berechnung des Kupplungsmindestmomentes kann beruhend auf dem Kupplungswegsignal S07 ein Kupplungsmindestmomentsignal S12 ermitteln, das wiederum von der Komponente E zur Ermittlung der Kupplungsschutzreaktion vorteilhaft verwendet werden kann, um den Wert des Kupplungsschutz-Flags S18 zu ermitteln.

Der Fachmann wird erkennen, dass nicht alle Signale und Komponenten zwingend zur Realisierung der obigen Verfahren erforderlich sind. Beispielsweise ist die Komponente F zur Berechnung des Kupplungsmindestmomentes optional und wird nur eingesetzt, falls in einer Ausführungsform das optionale Kupplungswegsignal S07 zur Verfügung steht. Auch ist die Komponente D zur Reibleistungsberechnung optional und wird nur eingesetzt, falls in einer Ausführungsform das optionale Kupplungsreibleistungssignal S13 und das optionale Kupplungsreibenergiesignal S14 von der Komponente E zur Ermittlung der Kupplungsschutzreaktion auch zur Ermittlung des Kupplungsschutz-Flags S18 herangezogen werden sollen. Die Komponente D zur Reibleistungsberechnung kann das Kupplungsreibleistungssignal S13 beispielsweise gegen einen vorbestimmten Schwellwert prüfen und, falls die Kupplungsreibleistung den Schwellwert übersteigt, die Kupplungsschutzreaktion auslösen, d.h. das Kupplungsschutzsignal S18 auf wahr setzen.

Die Komponente C zur Gang- und Eingangsdrehzahlberechnung kann das modellierte Getriebeeingangsdrehzahlsignal S16 und das modellierte Differenzdrehzahlsignal S17 an die Motorsteuerung zur weiteren Verwendung ausgeben. Der Fachmann wird erkennen, dass auch diese Ausgabe der Getriebeeingangsdrehzahlsignal S16 und der Differenzdrehzahlsignal S17 optional ist.

Das ausgegebene modellierte Getriebeeingangsdrehzahlsignal S16 kann beispielsweise den ermittelten nächstliegenden plausiblen Gang oder einen ermittelten Istgang angeben. Alternativ oder zusätzlich kann das modellierte Getriebeeingangsdrehzahlsignal S16 auch sämtliche plausiblen Gänge als Vektor angeben.

Das ausgegebene modellierte Differenzdrehzahlsignal S17 kann beispielsweise eine Differenzdrehzahl bezüglich dem nächstliegenden plausiblen Gang oder bezüglich dem ermittelten Istgang angeben. Alternativ oder zusätzlich kann das modellierte Differenzdrehzahlsignal S17 auch einen Vektor von Differenzdrehzahlen ausgeben, der für jeden plausiblen Gang eine entsprechende Differenzdrehzahl enthält.

Das von der Komponente E zur Ermittlung der Kupplungsschutzreaktion ausgegebene Kupplungsschutz-Flag S18 kann verwendet werden, um, falls das Kupplungsschutz-Flag S18 von der Komponente E zur Ermittlung der Kupplungsschutzreaktion auf wahr gesetzt wird, eine Kupplungsschutzreaktion einzuleiten, die beispielsweise darin bestehen kann, durch einen Motormomenteneingriff die Motordrehzahl auf die Drehzahl des eingelegten Ganges (oder des nächstliegenden Ganges) überzuführen.

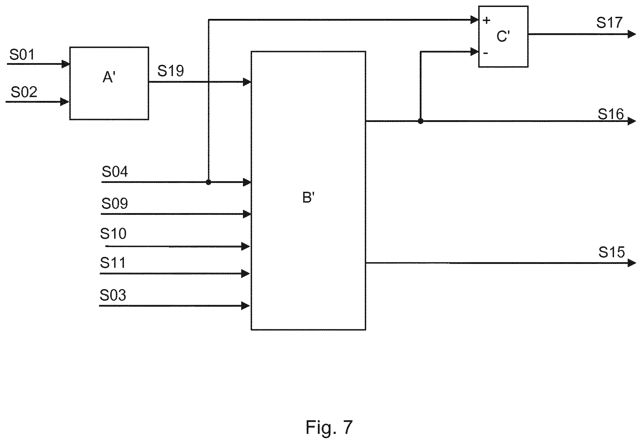

Fig. 7 zeigt ein weiteres Ausführungsbeispiel für funktionelle Komponenten einer elektronischen Vorrichtung, welche zur Implementierung der oben beschriebenen Verfahren eingesetzt werden kann. Auch hier sind die funktionellen Komponenten als Software implementiert, die auf einem Mikroprozessor ausgeführt wird, beispielsweise dem Mikroprozessor eines Motorsteuerungssystems.

Eine Komponente A' zur Berechnung der Getriebeeingangsdrehzahlen empfängt ein Fahrzeuggeschwindigkeitssignal S01 und ein Reifenumfangsignal S02 und ermittelt daraus einen Vektor aus Getriebeeingangsdrehzahlen. Die Komponente A' gibt diesen Vektor aus Getriebeeingangsdrehzahlen als Getriebeeingangsdrehzahlsignal S19 an eine Komponente B' zur Berechnung der plausibilisierten Getriebeeingangsdrehzahlen aus.

Die Komponente B' zur Berechnung der plausibilisierten Getriebeeingangsdrehzahlen empfängt das Getriebeeingangsdrehzahlsignal S19 von der Komponente A' zur Berechnung der Getriebeeingangsdrehzahlen und empfängt ferner ein Motordrehzahlsignal S04, ein Kupplungsmoment-Zug-Flag S09, ein Kupplungsmoment-Schub-Flag S10, ein Kupplungsmoment-Offen-Flag S11 und ein Schalthebelstatussignal S03. Die Komponente B' zur Berechnung der plausiblen Getriebeeingangsdrehzahlen ermittelt daraus ein modelliertes Getriebeeingansdrehzahlsignal S16, sowie ein modelliertes Gangsignal S15 und gibt diese aus. Die Komponente B' zur Berechnung der plausiblen Getriebeeingangsdrehzahlen gibt das modellierte Getriebeeingansdrehzahlsignal S16 ferner auch an eine Subtraktionskomponente C' aus, welche das modellierte Getriebeeingansdrehzahlsignal S16 und das Motordrehzahlsignal S04 empfängt, beruhend darauf durch Subtraktion eine oder mehrere modellierte Differenzdrehzahlen ermittelt und diese als modelliertes Differenzdrehzahlsignal S17 ausgibt.

Die Komponente B' zur Berechnung der plausibilisierten Getriebeeingangsdrehzahlen kann das Kupplungsmoment-Zug-Flag S09, das Kupplungsmoment-Schub-Flag S10 und das Kupplungsmoment-Offen-Flag S11 von einer Komponente zur Zug-Schub-Ermittlung erhalten, wie sie als Komponente B im Ausführungsbeispiel der Fig. 6 gezeigt ist.

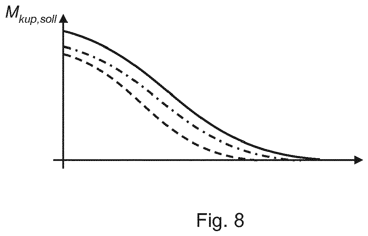

Fig. 8 zeigt in einem Diagramm einen beispielhaften Verlauf des Kupplungssollmoments $M_{kup,soll}$ (Kupplungsmindestmomentsignal S12 in Fig. 6) in Abhängigkeit des Kupplungsweges (Kupplungswegsignal S07 in Fig. 6). Auf der Rechtswertachse des Diagramms ist der Kupplungsweg abgetragen. Auf der Hochwertachse ist das Kupplungssollmoment $M_{kup,soll}$ abgetragen. Die durchgezogene Linie gibt eine Basiskennlinie an, die sich auf eine Kupplung im ursprünglichen Zustand bezieht. Die gestrichpunktete Linie gibt eine aktuelle Kupplungskennlinie an, die den aktuellen Abnutzungszustand repräsentiert. Die gestrichelte Linie gibt eine Grenzkennlinie an, unterhalb der weitere Kupplungsschutzmechanismen greifen können. Die Komponente F zur Ermittlung des Kupplungsmindestmomentes der Fig. 6 kann auf Grundlage der Basiskennlinie oder vorzugsweise auf Basis der aktuellen Kupplungskennlinie arbeiten.

**Bezugszeichenliste**

| | |
|---|---|
| 1 | Kraftfahrzeug (Komponenten) |
| 2 | Motor |
| 3 | Zweimassenschwungrad |
| 4 | Kupplung |
| 5 | Getriebe |
| 6 | Rad |
| 7 | Schalthebel |
| $n_{mot}$ | Motordrehzahl |
| $n_{kup}$ | Kupplungsdrehzahl (Eingangsdrehzahl Getriebe) |
| $n_{rad}$ | Raddrehzahl |
| $\Delta n$ | Differenzdrehzahl |
| $M_{kup,ist}$ | Kupplungsistmoment |
| $M_{mot}$ | Motordrehmoment |
| $\theta_{mot}$ | Trägheitsmoment des Motors |
| $\omega_{mot}$ | Motorwinkelbeschleunigung |
| $M_{th}$ | Drehmomentenschwellwert |
| G3 | dritter Gang |
| G4 | vierter Gang |
| G5 | fünfter Gang |
| G6 | sechster Gang |
| $t_0, t_1, t_2, t_3$ | Zeitpunkte |
| A | Komponente zur Berechnung des Kupplungsistmomentes |
| B | Komponente zur Zug-Schub-Ermittlung |
| C | Komponente zur Gang- und Eingangsdrehzahlberechnung |
| D | Komponente zur Reibleistungsberechnung |
| E | Komponente zur Ermittlung der Kupplungsschutzreaktion |
| F | Komponente zur Ermittlung des Kupplungsmindestmomentes |
| A' | Komponente zur Berechnung der Getriebeeingangsdrehzahlen |
| B' | Komponente zur Berechnung der plausibilisierten Getriebeeingangsdrehzahlen |
| C' | Subtraktionskomponente |
| S01 | Fahrzeuggeschwindigkeitssignal |
| S02 | Reifenumfangsignal |

S03      Schalthebelstatussignal
S04      Motordrehzahlsignal
S05      Motordrehmomentsignal
S06      Kupplungspedalstatussignal
S07      Kupplungswegsignal
S08      Kupplungsistmomentsignal
S09      Kupplungsmoment-Zug-Flagsignal
S10      Kupplungsmoment-Schub-Flag
S11      Kupplungsmoment-Offen-Flag
S12      Kupplungsmindestmomentsignal
S13      Kupplungsreibleistungssignal
S14      Kupplungsreibenergiesignal
S15      modelliertes Gangsignal
S16      modelliertes Getriebeeingansdrehzahlsignal
S17      modelliertes Differenzdrehzahlsignal
S18      Kupplungsschutz-Flag
S19      Getriebeeingangsdrehzahlsignal

**Patentansprüche**

1. Verfahren, umfassend ein Ermitteln einer Istgang-Abschätzung (S15) in einem Kraftfahrzeug mit einer Kupplung (4) zwischen einem Motor (2) und einem Getriebe (5), wobei die Istgang-Abschätzung (S15) auf einer Zug-Schub-Ermittlung beruht, **dadurch gekennzeichnet, dass** die Zug-Schub-Ermittlung auf einer Kupplungsmomentenberechnung beruht, wobei das Kupplungsmoment ($M_{kup,ist}$) basierend auf einem Drehmoment des Motors ($M_{mot}$) und basierend auf einem Drehmoment ($\theta_{mot} \times \dot\omega_{mot}$), das zu einer Drehzahländerung des Motors (2) erforderlich ist, berechnet wird.

2. Verfahren nach Anspruch 1, wobei das Drehmoment ($\theta_{mot} \times \dot\omega_{mot}$), das zu einer Drehzahländerung des Motors (2) erforderlich ist, aus einem Trägheitsmoment des Motors ($\theta_{mot}$) und einer zeitlichen Änderungen ($\dot\omega_{mot}$) der Motorwinkelgeschwindigkeit ermittelt wird.

3. Verfahren nach Anspruch 1 oder 2, wobei das Kupplungsmoment ($M_{kup,ist}$) durch Subtraktion des Drehmoments ($\theta_{mot} \times \dot\omega_{mot}$), das zu einer Drehzahländerung des Motors (2) erforderlich ist, vom Drehmoment des Motors ($M_{mot}$) berechnet wird.

4. Verfahren nach einem der vorstehenden Ansprüche, wobei die Zug-Schub-Ermittlung eine Berechnung eines Kupplungsistmomentes ($M_{kup,ist}$) gemäß folgender Gleichung umfasst:

$$M_{kup,ist} = M_{mot} - \theta_{mot} \times \dot\omega_{mot}$$

wobei $M_{kup,ist}$ ein Kupplungsmoment ist, $M_{mot}$ ein Drehmoment des Motors ist, $\theta_{mot}$ ein Trägheitsmoment des Motors ist und $\dot\omega_{mot}$ eine zeitliche Änderungen der Motorwinkelgeschwindigkeit ist.

5. Verfahren nach Anspruch 4, wobei die Zug-Schub-Ermittlung ferner einen Vergleich des berechneten Kupplungsistmoments ($M_{kup,ist}$) mit einem Schwellwert ($M_{th}$) umfasst.

6. Verfahren nach einem der vorstehenden Ansprüche, wobei die Istgang-Abschätzung auf einem Vergleich einer Motordrehzahl ($n_{mot}$) mit einer Eingangsdrehzahl eines Ganges (G3, ... G6) beruht.

7. Verfahren nach Anspruch 6, wobei der Vergleich der Motordrehzahl ($n_{mot}$) mit der Eingangsdrehzahl ferner das Ergebnis (S09, S10, S11) der Zug-Schub-Ermittlung berücksichtigt.

8. Verfahren nach einem der vorstehenden Ansprüche, wobei die Istgang-Abschätzung auf Basis der Zug-Schub-Ermittlung eine Vorzugsrichtung, beispielsweise bei Schub hin zu kürzeren Gängen oder bei Zug hin zu längeren Gängen, berücksichtigt.

9. Verfahren nach einem der vorstehenden Ansprüche, bei dem beruhend auf der ermittelten Istgang-Abschätzung (S15) eine Kupplungsschutzreaktion ausgeführt wird.

10. Verfahren nach Anspruch 9, wobei die Kupplungsschutzreaktion dadurch bewirkt wird, dass, sobald im Zug unzulässiger Kupplungsschlupf bezogen auf den nächstgelegenen Gang erkannt wird, dieser durch einen reduzierenden Motormomenteneingriff abgebaut wird.

11. Elektronische Vorrichtung, die dazu ausgelegt ist das Verfahren nach einem der vorstehenden Ansprüche auszuführen.

**Claims**

1. Method comprising a determination of an estimation of a currently engaged gear (S15) in a motor vehicle having a clutch (4) between a motor (2) and a transmission (5), wherein the estimation of a currently engaged gear (S15) is based on determining load/coast mode, **characterized in that** the determination of load/coast mode is based on a calculation of a clutch torque, wherein the clutch torque ($M_{kup,ist}$) is calculated based on a torque of the motor ($M_{mot}$) and based on a torque ($\theta_{mot} \times \dot\omega_{mot}$) that is required for modifying a rotating speed of the motor (2) .

2. Method according to Claim 1, wherein the torque ($\theta_{mot} \times \dot\omega_{mot}$) that is required for modifying a rotating speed of the motor (2) is determined from a torque of inertia of the motor ($\theta_{mot}$) and a temporal variation ($\omega_{mot}$) of the angular velocity of the motor.

3. Method according to Claim 1 or 2, wherein the clutch torque ($M_{kup.ist}$) is calculated by subtracting the torque ($\theta_{mot}$ x $\omega_{mot}$) that is required for modifying a rotating speed of the motor (2) from the torque of the motor ($M_{mot}$).

4. Method according to one of the preceding claims, wherein the determination of the load/coast mode comprises a calculation of an actual clutch torque ($M_{kup.ist}$) according to the following equation:

$$M_{kup.ist} = M_{mot} - \theta_{mot} \times \acute{\omega}_{mot}$$

where $M_{kup.ist}$ is a clutch torque, $M_{mot}$ is a torque of the motor, $\dot{\theta}mot$ is an inertia torque of the motor, and $\omega_{mot}$ is a temporal variation of the angular velocity of the motor.

5. Method according to Claim 4, wherein the determination of the load/coast mode furthermore comprises a comparison of the calculated actual clutch torque ($M_{kup.ist}$) with a threshold value ($M_{th}$).

6. Method according to one of the preceding claims, wherein the estimation of the currently engaged gear is based on a comparison of a motor rotating speed ($n_{mot}$) with an input rotating speed of a gear (G3, ...,G6).

7. Method according to Claim 6, wherein the comparison of the motor rotating speed ($n_{mot}$) with the input rotating speed furthermore takes into account the result (S09, S10, S11) of the determination of the load/coast mode.

8. Method according to one of the preceding claims, wherein the estimation of the currently engaged gear based on the determination of the load/coast mode takes into account a preferred direction, for example towards shorter gears in the case of a coast mode or towards longer gears in the case of a load mode.

9. Method according to one of the preceding claims, in which method a clutch-protection response (s15) is carried out based on the determined estimation of the currently engaged gear.

10. Method according to Claim 9, wherein the clutch-protection response is caused in that, as soon as impermissible clutch slippage in terms of the closest adjacent gear is identified in the load mode, said impermissible clutch slippage is alleviated by an intervention that reduces the motor torque.

11. Electronic device which is conceived for carrying out the method according to one of the preceding claims.

**Revendications**

1. Procédé, comprenant une détermination d'une estimation de rapport réel (S15) dans un véhicule automobile doté d'un embrayage (4) entre un moteur (2) et une boîte de vitesses (5), l'estimation de rapport réel (S15) reposant sur une détermination de traction/poussée, **caractérisé en ce que** la détermination de traction/poussée repose sur un calcul des moments d'embrayage, le moment d'embrayage ($M_{kup,ist}$) étant calculé sur la base d'un couple du moteur ($M_{mot}$) et sur la base d'un couple ($\theta_{mot} \times \dot{\omega}_{mot}$) qui est nécessaire à une variation de vitesse de rotation du moteur (2).

2. Procédé selon la revendication 1, dans lequel le couple ($\theta_{mot} \times \dot{\omega}_{mot}$) qui est nécessaire à une variation de vitesse de rotation du moteur (2) est déterminé à partir d'un moment d'inertie du moteur ($\theta_{mot}$) et d'une variation temporelle ($\omega_{mot}$) de la vitesse angulaire du moteur.

3. Procédé selon la revendication 1 ou 2, dans lequel le moment d'embrayage ($M_{kup,ist}$) est calculé en soustrayant du couple du moteur ($M_{mot}$) le couple ($\dot{\theta}_{mot} \times \omega_{mot}$) qui est nécessaire à une variation de vitesse de rotation du moteur (2).

4. Procédé selon l'une quelconque des revendications précédentes, dans lequel la détermination de traction/poussée comprend un calcul d'un moment réel d'embrayage ($M_{kup,ist}$) selon l'équation suivante :

$$M_{kup,ist} = M_{mot} - (\theta_{mot} \times \dot{\omega}_{mot}),$$

où $M_{kup,ist}$ est un moment d'embrayage, $M_{mot}$ est un couple du moteur, $\theta_{mot}$ est un moment d'inertie du moteur, et $\dot{\omega}_{mot}$ est une variation temporelle de la vitesse angulaire du moteur.

5. Procédé selon la revendication 4, dans lequel la détermination de traction/poussée comprend en outre une comparaison du moment réel d'embrayage ($M_{kup,ist}$) calculé avec une valeur seuil ($M_{th}$).

6. Procédé selon l'une quelconque des revendications précédentes, dans lequel l'estimation de rapport réel repose sur une comparaison d'une vitesse de rotation de moteur ($n_{mot}$) avec une vitesse de rotation d'entrée d'un rapport (G3, ... G6).

7. Procédé selon la revendication 6, dans lequel la comparaison de la vitesse de rotation de moteur

($n_{mot}$) avec la vitesse de rotation d'entrée tient compte en outre du résultat (S09, S10, S11) de la détermination de traction/poussée.

8. Procédé selon l'une quelconque des revendications précédentes, dans lequel l'estimation de rapport réel sur la base de la détermination de traction/poussée tient compte d'une direction préférentielle, par exemple lors d'une poussée vers des rapports plus courts ou lors d'une traction vers des rapports plus longs.

9. Procédé selon l'une quelconque des revendications précédentes, dans lequel une réponse de protection d'embrayage est effectuée sur la base de l'estimation de rapport réel (S15) déterminée.

10. Procédé selon la revendication 9, dans lequel la réponse de protection d'embrayage est provoquée en ce qu'un patinage d'embrayage inadmissible est désamorcé par une intervention réduisant le moment du moteur dès que ledit patinage est détecté lors de la traction en relation avec le rapport le plus proche.

11. Dispositif électronique conçu pour exécuter le procédé selon l'une quelconque des revendications précédentes.

Fig. 1

Fig. 2

Fig. 3

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1930631 B1
- US 6490517 B1
- EP 2331848 B1
- FR 2907746 A1